# EUROPÄISCHE PATENTANMELDUNG

(11) **EP 2 647 889 A2**
(43) Veröffentlichungstag der Anmeldung: **09.10.2013**
(21) Anmeldenummer: 13000536.6
(22) Anmeldetag: 01.02.2013
(51) Int. Cl.: F16J 15/32

(54) **Dichtungsanordnung**

(30) Priorität: 04.04.2012 DE 102012009036; 25.04.2012 DE 102012008387
(71) Anmelder: Carl Freudenberg KG, 69469 Weinheim (DE)
(72) Erfinder: Rettig, Roland, 69488 Birkenau (DE); Hofmann, Jens, 68305 Mannheim (DE); Pollmann, Johannes, 64658 Fürth (DE)

(57) **Zusammenfassung**

Dichtungsanordnung, umfassend einen ersten Dichtring (1) mit zumindest einer dynamisch beanspruchten ersten Dichtlippe (2), die ein abzudichtendes Maschinenelement (3) dichtend umschließt, wobei der ersten Dichtlippe (2) auf der einem abzudichtenden Raum (4) axial zugewandten Seite mit axialem Abstand benachbart ein Vorschaltelement (5) mit Filtereinrichtung (6) für das abzudichtende Medium (7) vorgeschaltet ist und wobei der erste Dichtring (1), das Vorschaltelement (5) und das abzudichtende Maschinenelement (3) einen Hohlraum (8) begrenzen. Das Vorschaltelement (5) weist zusätzlich zur Filtereinrichtung (6) eine Fördereinrichtung (9) zur Förderung des gefilterten abzudichtenden Mediums (7) axial in den Hohlraum (8) und zur ersten Dichtlippe (2) auf, wobei der Hohlraum (8) mittels zumindest einer Ausnehmung (10) mit dem abzudichtenden Raum (4) strömungsleitend verbunden ist.

## Beschreibung

### Technisches Gebiet

Die Erfindung betrifft eine Dichtungsanordnung, umfassend einen ersten Dichtring mit zumindest einer dynamisch beanspruchten ersten Dichtlippe, die ein abzudichtendes Maschinenelement dichtend umschließt, wobei der ersten Dichtlippe auf der einem abzudichtenden Raum axial zugewandten Seite mit axialem Abstand benachbart ein Vorschaltelement mit Filtereinrichtung für das abzudichtende Medium vorgeschaltet ist und wobei der erste Dichtring, das Vorschaltelement und das abzudichtende Maschinenelement einen Hohlraum begrenzen.

### Stand der Technik

Eine solche Dichtungsanordnung ist aus der EP 2 290 271 A1 bekannt. Die Filtereinrichtung des Vorschaltelements ist durch einen Filterring aus einem Filtervlies gebildet, der das abzudichtende Maschinenelement anliegend umschließt. Bezogen auf die abzudichtende Fläche des abzudichtenden Maschinenelements weist der Filterring eine Überdeckung auf, die ≤ 1 mm ist. Zur Verwendung gelangt die vorbekannte Dichtungsanordnung zum Beispiel in einem Getriebe oder in einer Achse eines Nutzfahrzeugs.
Durch den Filterring hindurch gelangt, mehr oder weniger zufällig und abhängig von dessen Durchlässigkeit, gereinigtes abzudichtendes Medium zur Schmierung an die erste Dichtlippe. Eine gezielte Förderung des abzudichtenden Mediums zur ersten Dichtlippe erfolgt nicht.
Der Filterring aus Filtervlies soll die erste Dichtlippe des ersten Dichtrings vor einer Beaufschlagung mit Verunreinigungen/Partikeln schützen, die sich im abzudichtenden Medium befinden. Die Verunreinigungen/Partikel sollen im Filtervlies zurückgehalten werden. Dadurch, dass die Verunreinigungen/Partikel von der ersten Dichtlippe ferngehalten werden, ist der abrasive Verschleiß an ihr minimiert.
Dabei ist jedoch zu beachten, dass die Filterwirkung für einige Anwendungsfälle nicht zufriedenstellend ist.
Während der bestimmungsgemäßen Verwendung der Dichtungsanordnung kann zwischen dem Filterring aus Filtervlies und der Oberfläche des abzudichtenden Maschinenelements ein dynamischer Spalt entstehen, durch den sowohl Feinschmutz als auch Grobpartikel in Richtung der ersten Dichtlippe gelangen. Der Feinschmutz und die Grobpartikel, die sich dann im Schmiermittel für die erste Dichtlippe befinden, können zu einem erhöhten abrasiven Verschleiß an der ersten Dichtlippe und damit zu einem unerwünscht frühzeitigen Ausfall der Dichtungsanordnung führen.

### Darstellung der Erfindung

Der Erfindung liegt die Aufgabe zugrunde, eine Dichtungsanordnung der eingangs genannten Art derart weiterzuentwickeln, dass eine Beaufschlagung der ersten Dichtlippe mit Feinschmutz und/oder Grobpartikeln unter allen Betriebsbedingungen minimiert wird und dass die Dichtungsanordnung dadurch gleichbleibend gute Gebrauchseigenschaften während einer langen Gebrauchsdauer aufweist.

Diese Aufgabe wird durch eine Dichtungsanordnung gemäß Anspruch 1 gelöst. Auf vorteilhafte Ausgestaltungen nehmen die Unteransprüche Bezug.

Zur Lösung der Aufgabe ist es vorgesehen, dass das Vorschaltelement zusätzlich zur Filtereinrichtung eine Fördereinrichtung zur Förderung des gefilterten abzudichtenden Mediums axial in den Hohlraum und zur ersten Dichtlippe aufweist und dass der Hohlraum mittels zumindest einer Ausnehmung mit dem abzudichtenden Raum strömungsleitend verbunden ist. Dabei ist von Vorteil, dass durch die Fördereinrichtung gefiltertes abzudichtendes Medium gezielt zur ersten Dichtlippe gefördert wird, um diese zu schmieren. Verunreinigungen innerhalb des abzudichtenden Mediums, insbesondere Feinschmutz und/oder Grobpartikel, werden in der Filtereinrichtung zurückgehalten.
Im Gegensatz zu Dichtungsanordnungen aus dem Stand der Technik, bei denen durch die Filtereinrichtung entweder wirksam gefiltert wird und dadurch die Gefahr besteht, dass zu wenig abzudichtendes Medium zur Schmierung der ersten Dichtlippe zu dieser gelangt oder durch eine geringere Filterwirkung zwar die Schmierung der ersten Dichtlippe verbessert, diese jedoch wegen der schlechten Filterwirkung einem erhöhten abrasiven Verschleiß unterliegt, bewirkt die erfindungsgemäße Dichtungsanordnung durch die Fördereinrichtung eine Zirkulation. Abzudichtendes Medium wird durch das Vorschaltelement gezielt in den Hohlraum zur ersten Dichtlippe gefördert. Während dieser Förderung wird das abzudichtende Medium mittels der Filtereinrichtung von Feinschmutz und/oder Grobpartikeln gesäubert, so dass die erste Dichtlippe nur von abzudichtendem Medium geschmiert wird, das im Wesentlichen frei von abrasiv wirksamen Verunreinigungen ist. Das aus dem abzudichtenden Raum durch die Fördereinrichtung gezielt geförderte abzudichtende Medium wird durch den Hohlraum und die Ausnehmung in gefiltertem Zustand wieder zurück in den abzudichtenden Raum geleitet.
Zur Schmierung der ersten Dichtlippe mit gefiltertem und abzudichtendem Medium entsteht durch das Vorschaltelement ein Schmiermittelkreislauf mit integrierter Filter- und Fördereinrichtung.

Bevorzugt ist die Fördereinrichtung gleichzeitig die Filtereinrichtung. Die erfindungsgemäße Dichtungsanordnung weist dadurch einen einfachen und teilearmen Aufbau auf. Sie ist einfach und kostengünstig herstellbar und bei der Montage der Dichtungsanordnung ist die Gefahr von Montagefehlern auf ein Minimum reduziert.

Die Fördereinrichtung und die Filtereinrichtung können durch einen Förderdrall gebildet sein. Dichtringe mit einem Föderdrall zur Förderung von abzudichtendem Medium sind in der Dichtungstechnik allgemein bekannt. Der Förderdrall ist dabei als Rückförderdrall ausgebildet und fördert abzudichtendes Medium, das die erste Dichtlippe des ersten Dichtrings schmiert, wieder zurück in den abzudichtenden Raum.

Erfindungsgemäß ist es vorgesehen, dass der Förderdrall, der zur gezielten Förderung des abzudichtenden Mediums zur ersten Dichtlippe genutzt wird, gleichzeitig auch die Filtereinrichtung bildet. Verunreinigungen aus dem abzudichtenden Medium werden beim Durchströmen des Förderdralls in diesem abgeschieden, so dass das abzudichtende Medium, das den Förderdrall in Richtung der ersten Dichtlippe verlässt, frei von diesen Verunreinigungen ist.

Der Förderdrall kann gewindegangförmig ausgebildet sein. Bevorzugt ein- bis dreigängig. Durch einen solchen Förderdrall gelangt abzudichtendes Medium nicht nur problemlos an die erste Dichtlippe, um diese zu schmieren. Durch den gewindeförmig ausgebildeten Förderdrall wird auch eine ausreichend gute Filterwirkung der Verunreinigungen aus dem abzudichtenden Medium erreicht. Die Ausgestaltung des Förderdralls, insbesondere Strömungsquerschnitt und Anzahl der Förderspiralrillen, haben Einfluss auf die Durchströmbarkeit der Fördereinrichtung und die Filterwirkung und sind vom jeweiligen Anwendungsfall abhängig.

Das Vorschaltelement kann durch einen zweiten Dichtring gebildet sein, mit einer zweiten Dichtlippe, die das abzudichtende Maschinenelement dichtend umschließt, wobei die zweite Dichtlippe auf ihrer dem abzudichtenden Maschinenelement zugewandten Seite den axial in Richtung der ersten Dichtlippe wirksamen Förderdrall aufweist.
Die zweite Dichtlippe kann, genauso wie die erste Dichtlippe, bevorzugt aus einem gummielastischen Werkstoff bestehen.
Dichtringe mit Dichtlippen aus gummielastischen Werkstoffen sind einfach und kostengünstig herstellbar. Die zweite Dichtlippe bewirkt nicht nur eine Förderung des abzudichtenden Mediums in Richtung der ersten Dichtlippe sondern auch die Filterung des abzudichtenden Mediums.

Die zweite Dichtlippe kann axial in Richtung des abzudichtenden Raums vorgewölbt ausgebildet sein.
Hierbei ist von Vorteil, dass die Gebrauchseigenschaften des Vorschaltelements dadurch besonders einfach an die jeweiligen Gegebenheiten des Anwendungsfalles angepasst werden können.
Die axiale Länge der zweiten Dichtlippe kann problemlos so gewählt werden, dass sie gleichermaßen als Förder- und Filtereinrichtung mit jeweils guten Gebrauchseigenschaften wirksam ist.
Je nach Montagerichtung des abzudichtenden Maschinenelements kann die zweite Dichtlippe abweichend axial in Richtung des abzudichtenden Raums rückgewölbt ausgebildet sein.

Die zweite Dichtlippe kann - herstellungsbedingt - relativ zum abzudichtenden Maschinenelement eine Überdeckung aufweisen. Durch diese Überdeckung ist auch dann die Funktion der zweiten Dichtlippe als Förder- und Filtereinrichtung sichergestellt, wenn das abzudichtende Maschinenelement, bezogen auf den zweiten Dichtring, betriebsbedingt exzentrisch angeordnet ist. Auch bei Unwuchten des abzudichtenden Maschinenelements und daraus resultierenden Exzentrizitäten des abzudichtenden Maschinenelements relativ zum zweiten Dichtring ist sichergestellt, dass der zweite Dichtring die Oberfläche des abzudichtenden Maschinenelements stets unter radialer Vorspannung anliegend berührt; sowohl die Förderung des abzudichtenden Mediums in Richtung der ersten Dichtlippe als auch dessen Filterung sind deshalb stets gewährleistet.

Die erste Dichtlippe und die zweite Dichtlippe können jeweils an einem Stützring festgelegt sein, wobei die Dichtlippen und die jeweils entsprechenden Stützringe jeweils eine vormontierbare Einheit bilden.
Die Stützringe können zum Beispiel aus einem metallischen Werkstoff bestehen und deshalb durch herkömmliche Fertigungsverfahren einfach und dauerhaft haltbar mit den Dichtlippen verbunden werden.
Zur Montage der Dichtungsanordnung werden die beiden vormontierbaren Einheiten einfach miteinander verbunden. Die Verbindung kann beispielsweise dadurch erfolgen, dass die beiden Einheiten in axialer Richtung ineinander gepresst werden.

Jeder der Stützringe kann L-förmig ausgebildet sein und jeweils einen Axialschenkel und jeweils einen Radialschenkel aufweisen.
In axialer Richtung ist der Hohlraum dann durch die Radialschenkel der Stützringe begrenzt. In axialer Richtung wird der Hohlraum radial innenseitig durch die Oberfläche des abzudichtenden Maschinenelements oder die erste Dichtlippe und radial außenseitig durch die Axialschenkel der Stützringe begrenzt. Jeweils radial innenseitig an den Radialschenkeln können die zugehörigen Dichtlippen angeordnet sein.

Der erste Axialschenkel des ersten Stützrings des ersten Dichtrings kann den zweiten Axialschenkel des zweiten Stützrings des zweiten Dichtrings außenumfangsseitig anliegend umschließen, wobei das freie axiale Ende des zweiten Axialschenkels innerhalb des Hohlraums angeordnet ist. Die Festlegung der beiden vormontierbaren Einheiten erfolgt dadurch, dass die beiden Axialschenkel der beiden Stützringe bevorzugt kraftschlüssig miteinander verbunden sind. Zur Bildung des Hohlraums kann der zweite Axialschenkel des zweiten Stützrings in den ersten Axialschenkel des ersten Stützrings eingepresst sein.
Das frele axiale Ende des zweiten Axialschenkels kann den Radialschenkel des ersten Stützrings mittelbar oder unmittelbar anliegend berühren. Durch diese Positionierungshilfe ist die Montage der Dichtungsanordnung vereinfacht. Der zweite Axialschenkel wird so lange in axialer Richtung in den ersten Axialschenkel eingepresst, bis das freie axiale Ende des zweiten Axialschenkels am Radlalschenkel des ersten Stützrings anliegt.

Die Ausnehmung ist bevorzugt kanalförmig ausgebildet, erstreckt sich im Wesentlichen in axialer Richtung und ist radial zwischen den beiden Axialschenkeln angeordnet. Weiter bevorzugt können mehrere Ausnehmungen vorgesehen sein, die entlang des Umfangs verteilt angeordnet sind. Zum Beispiel können die Ausnehmungen gleichmäßig in Umfangsrichtung verteilt angeordnet sein. Durch die Ausnehmung wird das durch die Fördereinrichtung gezielt in den Hohlraum geförderte und durch die Filtereinrichtung gefilterte abzudichtende Medium wieder in den abzudichtenden Raum zurückgefördert. Die kanalförmige Ausgestaltung der Ausnehmung ist vorteilhaft, well dadurch ein Kapillareffekt entsteht, der verhindert, dass ungefiltertes abzudichtendes Medium aus dem abzudichtenden Raum entgegen der Rückförderrichtung durch die Ausnehmung in den Hohlraum und dadurch zur ersten Dichtlippe gelangt. Als kanalförmig wird in diesem Zusammenhang eine Ausnehmung verstanden, deren Länge in axialer Richtung wesentlich größer als deren Durchmesser ist. Bevorzugt ist die Ausnehmung zumindest fünfmal, bevorzugt zumindest zehnmal länger als der Durchmesser.

Der zweite Axialschenkel kann außenumfangsseitig eine statische Dichtung aus gummielastischem Werkstoff aufweisen, die den ersten Axialschenkel unter radialer Vorspannung dichtend berührt.
Die statische Dichtung dichtet die beiden Kontaktflächen der Axialschenkel der Stützringe gegeneinander ab.

Die statische Dichtung kann in axialer Richtung von der Ausnehmung durchdrungen sein. Die Herstellung einer solchen Ausnehmung ist fertigungstechnisch einfach und kostengünstig. Einer vergleichsweise aufwendigen Bearbeitung von zumindest einem der beiden Axialschenkel zur Erzeugung der Ausnehmung bedarf es daher nicht.

Die zweite Dichtlippe und die statische Dichtung können einstückig ineinander übergehend und materialeinheitlich ausgebildet sein. Dadurch bildet die statische Dichtung einen Bestandteil des Vorschaltelements und der zweiten vormontierbaren Einheit. Auch eine solche Ausgestaltung trägt zu einem einfachen und teilearmen Aufbau bei, ebenso wie zu einer einfachen Montage der Dichtungsanordnung.

Der erste Dichtring kann als Radialwellendichtring ausgebildet sein. Prinzipiell kann das beschriebene Vorschaltelement mit beliebig ausgebildeten ersten Dichtringen zusammenwirken, die eine erste dynamisch beanspruchte Dichtlippe aufweisen. Radialwellendichtringe sind häufig zur Anwendung gelangende Dichtungen, die in vielen Bereichen des Maschinenbaus Anwendung finden, zum Beispiel zur Abdichtung von Getrieben oder Achsen in Nutzfahrzeugen. Für diese Anwendungen unter erschwerten Bedingungen ist eine gute Schmierung der ersten Dichtlippe mit gefiltertem abzudichtendem Medium besonders wichtig.

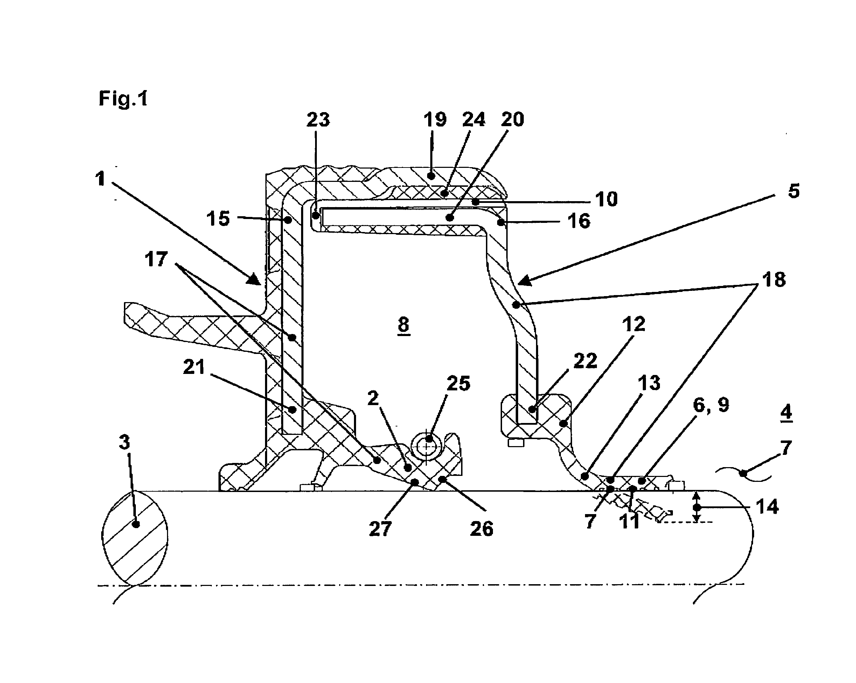

### Kurzbeschreibung der Zeichnung

Ein Ausführungsbeispiel der erfindungsgemäßen Dichtungsanordnung wird nachfolgend anhand der Figur näher beschrieben.

### Ausführung der Erfindung

In der Figur ist ein Ausführungsbeispiel der erfindungsgemäßen Dichtungsanordnung in schematischer Darstellung gezeigt. Der erste Dichtring 1 ist als Radialwellendichtring ausgebildet und kann zum Beispiel bevorzugt in einem Getriebe oder in einer Achse eines Nutzfahrzeugs zur Anwendung gelangen. Auf der dem abzudichtenden Raum 4 axial zugewandten Seite weist der Dichtring 1 eine dynamisch beanspruchte erste Dichtlippe 2 auf, die das abzudichtende Maschinenelement 3 dichtend umschließt. Die erste Dichtlippe 2 ist im hier dargestellten Ausführungsbeispiel radial außenumfangsseitig von einer Ringwendelfeder 25 umschlossen, die dafür sorgt, dass die Dichtlippe 2 die Oberfläche des abzudichtenden Maschinenelements 3 stets dichtend anliegend berührt.

Die erste Dichtlippe 2 ist durch zwei einander durchschneidende Kegelflächen 26, 27 gebildet, wobei die erste Kegelfläche 26, die dem abzudichtenden Raum 4 axial zugewandt ist, mit der Oberfläche des abzudichtenden Maschinenelements 3 einen größeren Winkel einschließt, als die zweite Kegelfläche 27. Die erste Dichtlippe 2 besteht aus einem gummielastischen Dichtungswerkstoff.

Auf der dem abzudichtenden Raum 4 axial zugewandten Seite der ersten Dichtlippe 2 ist mit axialem Abstand benachbart das Vorschaltelement 5 angeordnet, das eine Filtereinrichtung 6 für das abzudichtende Medium 7 aufweist. Das Vorschaltelement 5 umfasst nicht nur die Filtereinrichtung 6, sondern auch die Fördereinrichtung 9 zur gezielten Förderung des gefilterten abzudichtenden Mediums 7 axial in den Hohlraum 8 und zur ersten Dichtlippe 2. Dadurch wird erreicht, dass die erste Dichtlippe 2 stets ausreichend geschmiert ist und dadurch eine Mangelschmierung der ersten Dichtlippe 2 zuverlässig vermieden wird, wobei das abzudichtende Medium 7, das die erste Dichtlippe 2 schmiert, durch die Filtereinrichtung 6 von Verunreinigungen befreit ist. Die Fördereinrichtung 9 ist also gleichzeitig die Filtereinrichtung 6 und umgekehrt.

Um eine Zirkulation des abzudichtenden Mediums 7 zu erreichen, ist es erforderlich, dass der Hohlraum 8 mittels zumindest einer Ausnehmung 10 mit dem abzudichtenden Raum 4 strömungsleitend verbunden ist. Der Hohlraum 8 wird durch den ersten Dichtring 1, das Vorschaltelement 5 und das abzudichtende Maschinenelement 3 begrenzt.

Die zweite Dichtlippe 13 des zweiten Dichtrings 12 besteht im hier gezeigten Ausführungsbeispiel ebenfalls aus einem gummielastischen Werkstoff. Die zweite Dichtlippe 13 umschließt das abzudichtende Maschinenelement 3 dichtend und weist einen axial in Richtung der ersten Dichtlippe 2 wirksamen Förderdrall 11 auf. Der Förderdrall 11 sorgt nicht nur für eine gezielte Förderung des abzudichtenden Mediums 7 aus dem abzudichtenden Raum 4 zur ersten Dichtlippe 2, sondern gleichzeitig auch für eine gezielte Filterung des abzudichtenden Mediums 7, so dass Verunreinigungen aus dem Medium 7, wie beispielsweise Feinschmutz und/oder Grobpartikel, von der ersten Dichtlippe 2 zuverlässig ferngehalten werden. Der Förderdrall 11 ist gewindeförmig und mehrgängig ausgebildet, wobei die Größe und die Anzahl der Förderspiralrillen vom jeweiligen Anwendungsfall, insbesondere von der Größe der Grobpartikel, abhängt, die aus dem abzudichtenden Medium 7 herausgefiltert werden sollen.

Die zweite Dichtlippe 13 ist alleine durch ihre Überdeckung 14 und die Elastizität des Werkstoffs, aus dem sie besteht, unter radialer Vorspannung an das abzudichtende Maschinenelement 3 angedrückt. Eine Ringwendelfeder, wie sie beim ersten Dichtring 1 zur Anwendung gelangt, ist hier nicht vorgesehen. Die Überdeckung 14 ist in der Figur durch eine gestrichelte Gestalt der zweiten Dichtlippe 13 gezeigt.

Die Dichtungsanordnung besteht im Wesentlichen aus den beiden vormontierbaren Einheiten 17, 18, wobei die erste vormontierbare Einheit 17 aus dem ersten Dichtring 1 und die zweite vormontierbare Einheit 18 aus dem zweiten Dichtring 12 besteht.
Der erste Dichtring 1 umfasst die erste Dichtlippe 2, die am ersten Stützring 15 festgelegt ist. Demgegenüber umfasst der zweite Dichtring 12 die zweite Dichtlippe 13, die am zweiten Stützring 16 festgelegt ist. Die Stützringe 15, 16 weisen jeweils Radialschenkel 21, 22 auf, an denen radial innenseitig die Dichtlippen 2, 13 angeordnet sind. Radial außenumfangsseitig sind die beiden Radialschenkel 21, 22 mit den Axialschenkeln 19, 20 verbunden, wobei die beiden vormontierbaren Einheiten 17, 18 durch ein Ineinanderpressen der beiden Axialschenkel 19, 20 kraftschlüssig miteinander verbunden sind. Zur Abdichtung der beiden Axialschenkel 19, 20 gegeneinander ist die statische Dichtung 24 vorgesehen, die im hier gezeigten Ausführungsbeispiel mit dem zweiten Axialschenkel 20 verbunden ist und diesen außenumfangsseitig umschließt. Die statische Dichtung 24 ist unter radialer Vorspannung dichtend an den Innenumfang des ersten Axialschenkels 19 angepresst.

Die Zirkulation durch die Dichtungsanordnung erfolgt dadurch, dass aus dem abzudichtenden Raum 4 abzudichtendes Medium 7 mittels der zweiten Dichtlippe 13 mit ihrer Fördereinrichtung 9 und ihrer gleichzeitigen Filtereinrichtung 6 gezielt in Richtung der ersten Dichtlippe 2 gefördert und gleichzeitig dabei gezielt gefiltert wird. Das gefilterte abzudichtende Medium 7 schmiert die erste Dichtlippe und gelangt durch den Hohlraum 8 zur Ausnehmung 10 und wird durch deren kanalförmige Gestalt wieder in den abzudichtenden Raum 4 zurückgefördert. Durch diese Förderung gelangt stets von Verunreinigungen freies abzudichtendes Medium 7 zur ersten Dichtlippe 2.

## Patentansprüche

1. Dichtungsanordnung, umfassend einen ersten Dichtring (1) mit zumindest einer dynamisch beanspruchten ersten Dichtlippe (2), die ein abzudichtendes Maschinenelement (3) dichtend umschließt, wobei der ersten Dichtlippe (2) auf der einem abzudichtenden Raum (4) axial zugewandten Seite mit axialem Abstand benachbart ein Vorschaltelement (5) mit Filtereinrichtung (6) für das abzudichtende Medium (7) vorgeschaltet ist und wobei der erste Dichtring (1), das Vorschaltelement (5) und das abzudichtende Maschinenelement (3) einen Hohlraum (8) begrenzen, **dadurch gekennzeichnet, dass** das Vorschaltelement (5) zusätzlich zur Filtereinrichtung (6) eine Fördereinrichtung (9) zur Förderung des gefilterten abzudichtenden Mediums (7) axial in den Hohlraum (8) und zur ersten Dichtlippe (2) aufweist und dass der Hohlraum (8) mittels zumindest einer Ausnehmung (10) mit dem abzudichtenden Raum (4) strömungsleitend verbunden ist.

2. Dichtungsanordnung nach Anspruch 1, **dadurch gekennzeichnet, dass** die Fördereinrichtung (9) gleichzeitig die Filtereinrichtung (6) ist.

3. Dichtungsanordnung nach einem der Ansprüche 1 oder 2, **dadurch gekennzeichnet, dass** die Fördereinrichtung (9) und die Filtereinrichtung (6) durch einen Förderdrall (11) gebildet sind.

4. Dichtungsanordnung nach Anspruch 3, **dadurch gekennzeichnet, dass** der Förderdrall (11) gewindegangförmig ausgebildet ist.

5. Dichtungsanordnung nach einem der Ansprüche 1 bis 4, **dadurch gekennzeichnet, dass** das Vorschaltelement (5) durch einen zweiten Dichtring (12) gebildet ist, mit einer zweiten Dichtlippe (13), die das abzudichtende Maschinenelement (3) dichtend umschließt und dass die zweite Dichtlippe (13) auf ihrer dem abzudichtenden Maschinenelement (3) zugewandten Seite den axial in Richtung der ersten Dichtlippe (2) wirksamen Förderdrall (11) aufweist.

6. Dichtungsanordnung nach Anspruch 5, **dadurch gekennzeichnet, dass** die zweite Dichtlippe (13) axial in Richtung des abzudichtenden Raums (4) vorgewölbt ausgebildet ist.

7. Dichtungsanordnung nach einem der Ansprüche 5 oder 6, **dadurch gekennzeichnet, dass** die zweite Dichtlippe (13) -herstellungsbedingtrelativ zum abzudichtenden Maschinenelement (3) eine Überdeckung (14) aufweist.

8. Dichtungsanordnung nach einem der Ansprüche 1 bis 7, **dadurch gekennzeichnet, dass** die erste Dichtlippe (2) und die zweite Dichtlippe (13) jeweils an einem Stützring (15, 16) festgelegt sind und dass die Dichtlippen (2, 13) und die jeweils entsprechenden Stützringe (15, 16) jeweils eine vormontierbare Einheit (17, 18) bilden.

9. Dichtungsanordnung nach Anspruch 8, **dadurch gekennzeichnet, dass** jeder der Stützringe (15, 16) L-förmig ausgebildet ist und jeweils einen Axialschenkel (19, 20) und jeweils einen Radialschenkel (21, 22) aufweist.

10. Dichtungsanordnung nach Anspruch 9, **dadurch gekennzeichnet, dass** der erste Axialschenkel (19) des ersten Stützrings (15) des ersten Dichtrings (1) den zweiten Axialschenkel (20) des zweiten Stützrings (16) des zweiten Dichtrings (12) aussenumfangsseitig anliegend umschließt und dass das freie axiale Ende (23) des zweiten Axialschenkels (20) innerhalb des Hohlraums (8) angeordnet ist.

11. Dichtungsanordnung nach einem der Ansprüche 1 bis 10, **dadurch gekennzeichnet, dass** die Ausnehmung (10) kanalförmig ausgebildet ist und sich im Wesentlichen in axialer Richtung erstreckt und radial zwischen den beiden Axialschenkeln (19, 20) angeordnet ist.

12. Dichtungsanordnung nach einem der Ansprüche 9 bis 11, **dadurch gekennzeichnet, dass** der zweite Axialschenkel (20) aussenumfangsseitig eine statische Dichtung (24) aus gummielastischem Werkstoff aufweist, die den ersten Axialschenkel (19) unter radialer Vorspannung dichtend berührt.

13. Dichtungsanordnung nach Anspruch 12, **dadurch gekennzeichnet, dass** die statische Dichtung (24) in axialer Richtung von der Ausnehmung (10) durchdrungen ist.

14. Dichtungsanordnung nach einem der Ansprüche 5 bis 13, **dadurch gekennzeichnet, dass** die zweite Dichtlippe (13) und die statische Dichtung (24) einstückig ineinander übergehend und materialeinheitlich ausgebildet sind.

15. Dichtungsanordnung nach einem der Ansprüche 1 bis 14, **dadurch gekennzeichnet, dass** der erste Dichtring (1) als Radialwellendichtring ausgebildet ist.
